**Europäisches Patentamt**

**European Patent Office**

(19)

**Office européen des brevets**

(11) Veröffentlichungsnummer : **0 541 827 B1**

(12) **EUROPÄISCHE PATENTSCHRIFT**

(45) Veröffentlichungstag der Patentschrift :
**12.04.95 Patentblatt 95/15**

(51) Int. Cl.⁶ : **G01D 5/36,** G01D 5/249

(21) Anmeldenummer : **91118747.4**

(22) Anmeldetag : **04.11.91**

(54) **Vorrichtung zur Erzeugung oberwellenfreier periodischer Signale.**

(43) Veröffentlichungstag der Anmeldung :
**19.05.93 Patentblatt 93/20**

(45) Bekanntmachung des Hinweises auf die
Patenterteilung :
**12.04.95 Patentblatt 95/15**

(84) Benannte Vertragsstaaten :
**DE FR GB IT**

(56) Entgegenhaltungen :
**DE-A- 3 239 108
DE-A- 3 616 144**

(56) Entgegenhaltungen :
**DE-B- 1 941 731
DE-C- 3 412 128
FR-A- 2 522 164
PATENT ABSTRACTS OF JAPAN, Band 012,
Nr. 090 (P-679), 24. März 1988 ; & JP-A-62 225
911**

(73) Patentinhaber : **Dr. Johannes Heidenhain
GmbH
Postfach 12 60
D-83292 Traunreut (DE)**

(72) Erfinder : **Holzapfel, Wolfgang, Dr.
Blumenstrasse 24
W-8201 Obing (DE)**

EP 0 541 827 B1

## Beschreibung

Die Erfindung bezieht sich auf eine Vorrichtung gemäß der Oberbegriffe der Ansprüche 1 und 2.

Derartige Vorrichtungen werden zur Messung von Lageänderungen zweier relativ zueinander beweglicher Objekte benötigt. Dabei werden die unterschiedlichsten physikalischen Abtastprinzipien benutzt. Man unterscheidet zwischen fotoelektrischer, magnetischer, induktiver und kapazitiver Abtastung.

Das Grundprinzip ist jedoch allen Methoden gemeinsam: Eine periodische Meßteilung wird abgetastet und das so erzeugte Abtastsignal wird als Meßsignal ausgewertet.

Die Periode der gewonnenen Abtastsignale wird durch die Teilungsperiode oder das Inkrement der Teilung des Teilungsträgers bestimmt. Das Inkrement wird bei fotoelektrischen Meßeinrichtungen durch die Breiten eines lichtdurchlässigen Streifens und eines lichtundurchlässigen Streifens in Meßrichtung gebildet. Bei der Relativbewegung zwischen der Abtasteinheit und der Meßteilung des Teilungsträgers wird von jedem abgetasteten Inkrement ein Zählimpuls abgeleitet, vorzeichenrichtig aufsummiert und die Summe steht als Meßwert zur Verfügung.

Die aus den Teilungen der Teilungsträger bei fotoelektrischen, magnetischen, induktiven und kapazitiven Meßeinrichtungen gewonnenen periodischen Analogsignale weisen im allgemeinen keinen reinen sinusförmigen Verlauf auf, sondern sind beispielsweise infolge von Ungenauigkeiten der Teilungen oberwellenbehaftet. Diese Ungenauigkeiten der Teilungen werden zum Beispiel durch unterschiedliche Abstände der lichtdurchlässigen und lichtundurchlässigen Streifen oder durch eine Kantenunschärfe dieser Streifen hervorgerufen. Um die gewonnenen Analogsignale weitgehend oberwellenfrei zu halten, müssen hohe Anforderungen an die Genauigkeit der Teilungen gestellt werden. Zur Bildung von genauen Positionsmeßwerten für jede Teilungsperiode und um zur weiteren Erhöhung der Auflösung die Teilungsperioden der Teilung durch Bildung von Interpolationswerten exakt unterteilen zu können, muß das aus dieser Teilung gewonnene Analogsignal oberwellenfrei sein; eine Bildung von Interpolationswerten beispielsweise mittels eines Rechners ist in der DE-OS 27 29 697 beschrieben.

Weiterhin sind Meßeinrichtungen bekannt, die dreieckförmige oder trapezförmige Analogsignale liefern, die naturgemäß stets oberwellenbehaftet sind.

Aus der DE-PS 19 41 731 ist eine fotoelektrische Längenmeßeinrichtung bekannt, bei der zur Gewinnung eines oberwellenfreien Analogsignals bei der Abtastung der Teilung eines Teilungsträgers eine Frequenzfilterblende mit einem sinusförmigen Durchlässigkeitsverlauf vorgesehen ist. Bei dieser Meßeinrichtung muß eine spezielle Frequenzfilterblende hergestellt und eingebaut werden. Zudem ist diese Meßeinrichtung auf das fotoelektrische Durchlichtmeßprinzip beschränkt, bei dem ein aus periodischen Helligkeitsschwankungen aufgebautes Streifensystem nach den sogenannten Vernier- oder Moirèprinzipien erzeugt wird.

Zur Gewinnung oberwellenfreier periodischer Signale wird in der DE 32 39 108 C2 vorgeschlagen, die Bandbreite (Anzahl der Frequenzen oder Wellen) des Analogsignals zu ermitteln, die Teilungsperiode der Teilung jeweils mit Abtastelementen abzutasten, die von den Abtastelementen gelieferten periodischen Analogsignale zur Ermittlung von Fourierkoeffizienten der Grundwelle des Analogsignals einer Fourieranalyse zu unterziehen und die Fourierkoeffizienten als oberwellenfreie periodische Signale zur Bildung von Positionsmeßwerten auszuwerten.

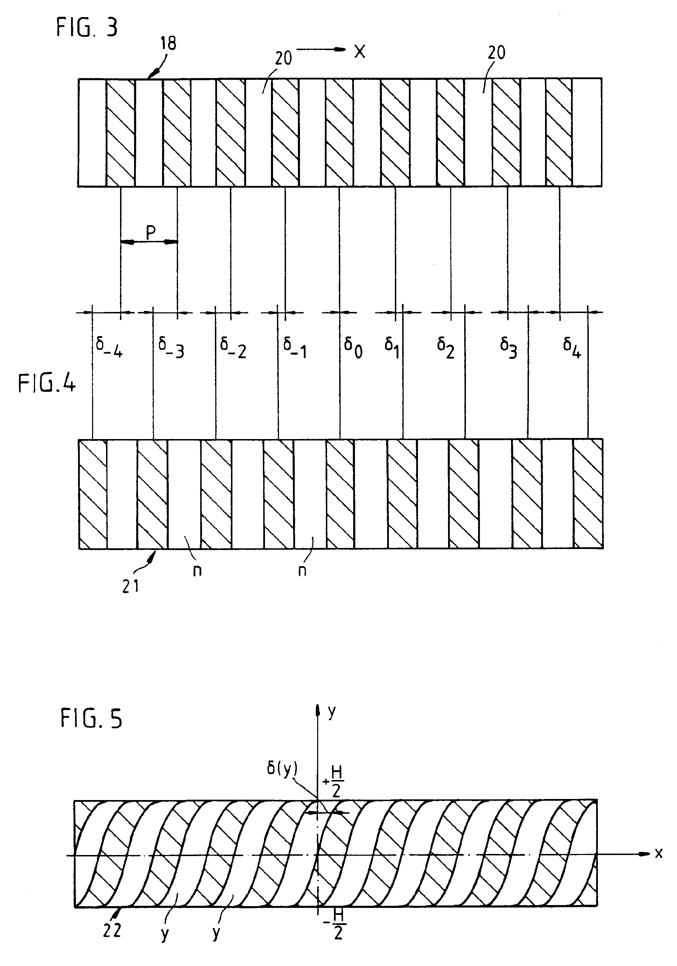

Ein mathematisch äquivalenter, aber ausführungsmäßig völlig anderer Ansatz zur Oberwellenfilterung ist aus der DE 34 12 128 C1 als sogenannte arcsin-Abtastung bekannt. Nach einem 1.Gitter entsteht eine Intensitätsverteilung (Gitterbild im Schattenwurf oder Selbstabbildung in der Talbot-Ebene) die mit einem Gitter variabler Teilung abgetastet wird, wie sie in Figur 4 schematisch dargestellt ist. Nachteilig ist hierbei, daß die ideale Verteilung der arcsin-Abtastteilung je nach Gesamtzahl der Linien verschieden ist.

Der Erfindung liegt die Aufgabe zugrunde, eine Vorrichtung zur Gewinnung oberwellenfreier periodischer Signale anzugeben, die zu diesem Zweck keiner zusätzlichen Elemente bedarf und universell einsetzbar ist.

Ferner sollen nicht nur alle ganzzahligen Oberwellen ausgefiltert werden können, sondern auch alle Subharmonischen.

Diese Aufgabe wird erfindungsgemäß durch die Merkmale der Ansprüche 1 und 4 gelöst.

Die mit der Erfindung erzielten Vorteile bestehen insbesondere darin, daß auf einfache Weise die Gewinnung oberwellenfreier periodischer Signale lediglich mit abgewandelten herkömmlichen Mitteln bekannter Positionsmeßeinrichtungen ermöglicht wird, ohne daß zusätzliche Elemente wie Frequenzfilterblenden erforderlich sind und ohne daß besondere Anforderungen an die Genauigkeit der Teilung gestellt werden müssen.

Vorteilhafte Weiterbildungen der Erfindung entnimmt man den Unteransprüchen.

Ausführungsbeispiele der Erfindung werden anhand der Zeichnung näher erläutert.

Es zeigt

Figur 1       eine Längenmeßeinrichtung im Querschnitt;

Figur 2       schematisch eine Abtasteinheit einer fotoelektrischen Längenmeßeinrichtung;

Figur 3      eine Abtastteilung ohne Filterwirkung, dem gegenüber

Figur 4      eine Abtastteilung mit Filterwirkung und

Figur 5      eine periodische Abtastteilung mit Filterwirkung und

Figur 6      ein Diagramm.

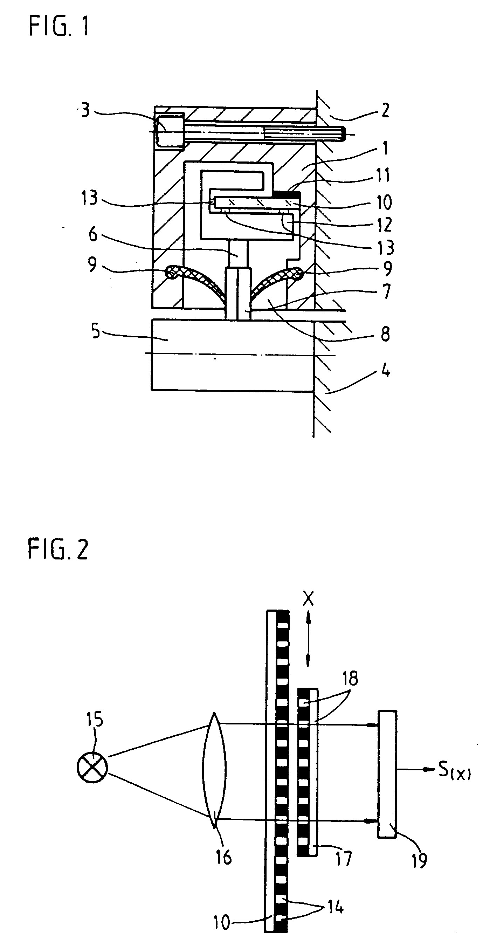

In Figur 1 ist eine Längenmeßeinrichtung im Querschnitt dargestellt, deren Gehäuse 1 in Form eines Hohlprofils an einem Bett 2 einer nicht dargestellten Bearbeitungsmaschine mittels einer Schraubverbindung 3 befestigt ist. An einem Schlitten 4 der Bearbeitungsmaschine ist ein Montagefuß 5 mit einem Mitnehmer 6 in beliebiger Weise befestigt, der über eine schneidenförmige Verjüngung 7 durch einen Schlitz 8 in das im übrigen vollkommen geschlossene Gehäuse 1 hineinragt, wobei im Schlitz 8 vorgesehene elastische Dichtlippen 9 ein Eindringen von Verunreinigungen in das Innere des Gehäuses 1 verhindern. An einer Innenfläche des Gehäuses 1 ist ein Maßstab 10 mittels einer elastischen Klebeschicht 11 angebracht, an dem sich eine Abtasteinheit 12 über Rollen 13 abstützt; die Relativbewegung des Schlittens 4 bezüglich des Betts 2 wird vom Mitnehmer 6 auf die Abtasteinheit 12 übertragen.

Gemäß Figur 2 sind zur Abtastung einer Teilung 14 des Maßstabs 10 in der Abtasteinheit 12 eine Lichtquelle 15, ein Kondensor 16, eine Abtastplatte 17 mit einer Teilung 18 und ein Photoelement 19 angeordnet. Der von der Lichtquelle 15 ausgehende Lichtstrom wird vom Kondensor 16 parallel gerichtet, durchsetzt die Teilungen 14, 18 des Maßstabs 10 und der Abtastplatte 17 und fällt anschließend auf das Photoelement 19. Bei der Bewegung der Abtasteinheit 12 mit der Abtastplatte 17 in Meßrichtung X gegenüber dem feststehenden Maßstab 10 wird der Lichtstrom an den Teilungen 14, 18 moduliert, so daß das Photoelement 19 ein periodisches elektrisches Analogsignal S (X) liefert, das ausgewertet, gezählt und in digitaler Form als Positionsmeßwert zur Anzeige gebracht wird.

Das vom Photoelement 19 gelieferte periodische Analogsignal S (X) ist im allgemeinen z.B. aufgrund von Ungenauigkeiten der Teilungen 14, 18 oberwellenbehaftet und kann als Funktion des Meßweges X durch eine Fourierreihe dargestellt werden.

Eine in Figur 3 gezeigte Abtastteilung 18 mit geradlinigen periodischen Teilungsmarkierungen 20 ruft keine Unterdrückung von Oberwellen hervor. Wenn man jedoch die Abtastteilung 18 gegenüber der Meßteilung 14 gleicher Teilungsperiode P etwas verdreht, entsteht ein sogenanntes Moirémuster. Darunter versteht man ein aus periodischen Helligkeitsschwankungen aufgebautes Streifensystem mit größerer Periodenlänge als die Teilungsperiode P von Meßteilung 14 und Abtastteilung 18. Wenn diesem Moiré-Streifenmuster lagerichtig Detektoren zugeordnet werden, lassen sich ein Teil der Oberwellen z.B. alle geraden unterdrücken.

Wenn die Meßteilung 14 und die Abtastteilung 18 unterschiedliche aber periodische Teilungen besitzen (also wieder gemäß Figur 3) entsteht ein sogenanntes Vernier-Streifenmuster, wiederum mit größerer Periode als die Perioden P und P′ der Meß- und Abtastteilungen. Mit entsprechend angeordneten Detektoren lassen sich wiederum ein Teil der Oberwellen eliminieren.

Für die Oberwellenunterdrückung gemäß der bereits erwähnten arcsin-Funktion nach DE 34 12 128 C1 ist eine nichtperiodische Abtastteilung 21 erforderlich. Deren einzelne Teilungsmarkierungen n (n=-N bis +N) sind jeweils um einen kleinen Betrag $\delta_n$ in Meßrichtung X verschoben gegenüber der Nennposition einer entsprechend zugeordneten periodischen Meßteilung. Es gilt

$$\delta_n = P/2\pi \ast \arcsin(n/N).$$

Diese Methode erlaubt nur eine Unterdrückung der ungeraden Oberwellen.

Eine solche nichtperiodische Abtastteilung 21 ist - schematisch betrachtet - in Figur 4 dargestellt.

Allerdings stellt Figur 4 auch eine erfindungsgemäße Abtastteilung 21 dar. Zeichnerisch ist der Unterschied zwischen dem Stand der Technik und diesem Ausführungsbeispiel nicht darstellbar, da die Variation der Teilung nach einer erfindungsgemäßen Variation der arcsin-Funktion vorgenommen wird.

Technisch gesehen besteht die Variation der arcsin-Filterung in einer kombinierten Vernier- (bzw. Moiré-) und arcsin-Filterung, was ebenfalls eine Verschiebung der einzelnen Teilungsmarkierungen n um Beträge $\delta_n$ (n= -N bis +N) zur Folge hat, die jedoch von der bekannten arcsin-Verschiebung abweichen.

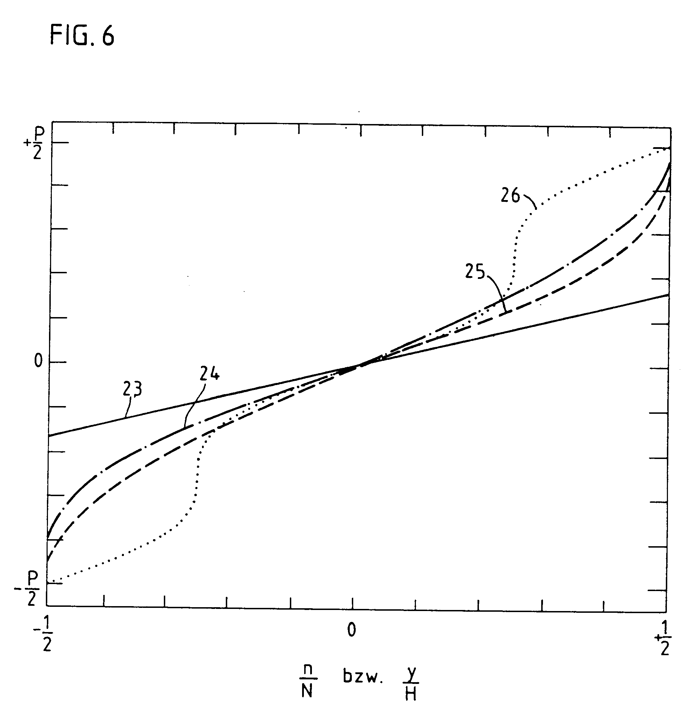

Eine mathematische Behandlung der Filterwirkung ergibt folgende transzendente Bestimmungsgleichungen für die Verschiebung $\delta_n$, aus denen $\delta_n$ numerisch berechnet werden kann (siehe Diagramm in Figur 6):

1. Abtastverfahren mit Signalperiode (SP) = Teilungsperiode (P) (z.B.: Talbot/Schattenwurf - Verfahren):

$$n/2N = \delta_n/P + 1/2\pi \ast \sin(2\pi\delta_n/P)$$

(Unterdrückung aller (ganzzahligen) Oberwellen)

2. Abtastverfahren mit Signalperiode (SP) = 1/2 Teilungsperiode (P), wie es beispielsweise bei interferentiell arbeitenden Dreigittergebern angewandt wird:

$$n/2N = \delta_n/P + 1/4\pi \ast \sin(4\pi\delta_n/P)$$

(Unterdrückung aller ganzzahligen und halbzahligen Oberwellen)

Dem jeweils ersten Term auf der rechten Seite der Gleichungen entspricht eine Vernier-Filterung (lineare Zunahme der Verschiebung der Teilungsmarkierungen n auf der Abtastteilung 21), dem zweiten eine arcsin-Filterung. Durch die besondere Art der Kombination von Vernier- und arcsin-Filterung, wie sie in den obigen Gleichungen enthalten ist, läßt sich eine Unterdrückung aller auftretenden Oberwellen erreichen.

Ferner ist es möglich, eine arcsin-Filterung auch durch arcsin-förmig gebogene, in Meßrichtung aber äquidistante Teilungsmarkierungen y zu erzielen. Dies läßt sich auf die kombinierte Vernier/arcsin-Filterung übertragen (siehe Figur 5), die in diesem Fall eher als kombinierte Moiré/(arcsin-Filterung zu bezeichnen ist. Die Bestimmungsgleichungen für $\delta(y)$ lauten analog zu oben:

3. Abtastverfahren mit Signalperiode (SP) = Teilungsperiode (P)

$$y/H = \delta(y)/P + 1/2\pi * \sin(2\pi\delta(y)/P)$$

4. Abtastverfahren mit Signalperiode (SP) = 1/2 Teilungsperiode (P)

$$y/H = \delta(y)/P + 1/4\pi * \sin(4\pi\delta(y)/P)$$

H ist die Länge der Teilungsmarkierungen y senkrecht zur Meßrichtung X (siehe Figur 5).

Da in diesem Fall die Teilung periodisch ist, kann auch die Meßteilung (statt der Abtastteilung 22) in dieser Form ausgebildet sein.

Im Diagram gemäß Figur 6 ist der Verlauf der Filterung in den unterschiedlichen Kurven angegeben. Dabei bedeutet die mit durchgehender Linie dargestellte Kurve 23 die herkömmliche Vernier- bzw. Moiré-Filterung. Die strichpunktierte Kurve 24 stellt die arcsin-Filterung bei gleicher Signal- und Teilungsperiode SP und P dar. Die gestrichelte Kurve 25 stellt die kombinierte Vernier/arcsin-Filterung dar und zwar wenn die Signalperiode SP gleich der Teilungsperiode P der Meßteilung 14 ist. Die punktiert dargestellte Kurve entspricht dem Verlauf der kombinierten Vernier/arcsin-Filterung, wenn die Signalperiode SP einer halben Teilungsperiode P/2 entspricht.

## Patentansprüche

1. Vorrichtung zur Gewinnung von bis zu einer vor bestimmbaren Bandbreite oberwellenfreien Signalen, die durch Abtastung einer periodischen Meßteilung (14) mit wenigstens einer Abtastteilung (21) erzeugt werden, wobei die Abtastteilung (21) jeweils eine Anzahl von unperiodisch zueinander versetzten Abtastfeldern aufweist, dadurch gekennzeichnet, daß die Abtastfelder(n) die gleiche Breite aufweisen und daß der Abstand der Abtastfeldmitten nach einer abgewandelten, nämlich einer kombinierten Vernier-arcsin-Funktion gestaffelt ist, wobei die Abtastteilung (21) nach der Formel

$$n/2N = \delta_n/P + 1/2\pi * \sin(2\pi\delta_n/P)$$

gebildet wird, wenn die Signalperiode (SP) gleich der Teilungsperiode (P) der Meßteilung (14) ist, oder wobei die Abtastteilung (21) nach der Formel

$$n/2N = \delta_n/P + 1/4\pi * \sin(4\pi\delta_n/P)$$

gebildet wird, wenn die Signalperiode (SP) gleich der halben Teilungsperiode (P/2) der Meßteilung (14) ist.

2. Vorrichtung zur Gewinnung von bis zu einer vor bestimmbaren Bandbreite oberwellenfreien Signalen, die durch Abtastung einer periodischen Meßteilung (14) mit einer Abtastteilung, die wenigstens ein Abtastfeld (Y) aufweist, erzeugt werden, dadurch gekennzeichnet, daß das Abtastfeld (Y) nach einer abgewandelten, nämlich einer kombinierten Moiré-arcsin-Funktion geformt ist, wobei die Abtastteilung (22) nach der Formel

$$y/H = \delta(y)/P + 1/2\pi * \sin(2\pi\delta(y)/P)$$

gebildet wird, wenn die Signalperiode (SP) gleich der Teilungsperiode (P) der Meßteilung (14) ist, oder wobei die Abtastteilung (22) nach der Formel

$$y/H = \delta(y)/P + 1/4\pi * \sin(4\pi\delta(y)/P)$$

gebildet wird, wenn die Signalperiode (SP) gleich der halben Teilungsperiode (P/2) der Meßteilung (14) ist.

3. Vorrichtung nach Anspruch 2, dadurch gekennzeichnet, daß in Meßrichtung (X) mehrere Abtastfelder (Y) hintereinander angeordnet sind, die eine periodische Abtastteilung (22) bilden, deren Periode der Teilungsperiode (P) der Meßteilung (14) entspricht.

## Claims

1. Device for obtaining signals which are free from harmonics up to a bandwidth which can be predetermined and which are generated by scanning a periodic measuring graduation (14) with at least one scanning graduation (21), wherein the scanning graduation (21) comprises in each case a number of scanning areas offset from each other aperiodically, characterised in that the scanning areas have the same width and in that the distance between the centres of the scanning areas is staggered according to a modified, namely a combined Vernier-arcsin function, wherein the scanning graduation (21) is formed according to the formula

$$n/2N \ = \ \delta_n/P \ + \ 1/2\pi \ * \ \sin \ (2\pi\delta_n/P)$$

if the signal period (SP) is equal to the graduation period (P) of the measuring graduation (14), or wherein the scanning graduation (21) is formed according to the formula

$$n/2N \ = \ \delta_n/P \ + \ 1/4\pi \ * \ \sin \ (4\pi\delta_n/P)$$

if the signal period (SP) is equal to half the graduation period (P/2) of the measuring graduation (14).

2. Device for obtaining signals which are free from harmonics up to a bandwidth which can be predetermined and which are generated by scanning a periodic measuring graduation (14) with a scanning graduation which comprises at least one scanning area (Y), characterised in that the scanning area (Y) is shaped according to a modified, namely a combined moiré-arcsin function, wherein the scanning graduation (22) is formed according to the formula

$$y/H \ = \ \delta(y)/P \ * \ 1/2\pi \ * \ \sin \ (2\pi\delta(y)/P)$$

if the signal period (SP) is equal to the graduation period (P) of the measuring graduation (14), or wherein the scanning graduation (21) is formed according to the formula

$$y/H \ = \ \delta(y)/P \ + \ 1/4\pi \ * \ \sin \ (4\pi\delta(y)/P)$$

if the signal period (SP) is equal to half the graduation period (P/2) of the measuring graduation (14).

3. Device according to claim 2, characterised in that one behind the other in the direction of measurement (X) are arranged several scanning areas (Y) which form a periodic scanning graduation (22) of which the period corresponds to the graduation period (P) of the measuring graduation (14).


**Revendications**

1. Dispositif pour produire des signaux qui, jusqu'à une largeur de bande prédéterminée, sont exempts d'harmoniques et sont obtenus par balayage d'une graduation de mesure (14) périodique à l'aide d'au moins une graduation de balayage (21), la graduation de balayage (21) comportant un certain nombre de zones de balayage mutuellement décalées de manière non périodique, caractérisé par le fait que la (les) zone(s) de balayage ont la même largeur et par le fait que la distance entre les milieux des zones de balayage est étagée conformément à une fonction modifiée, à savoir une fonction combinée Vernier-arcsinus, la graduation de balayage (21) étant réalisée selon la formule

$$n/2N \ = \ \delta_n/P \ + \ 1/2\pi \ * \ \sin \ (2\pi\delta_n/P)$$

lorsque la période du signal (SP) est égale à la période de graduation (P) de la graduation de mesure (14) et la graduation de balayage (21) étant réalisée selon la formule

$$n/2N \ = \ \delta_n/P \ + \ 1/4\pi \ * \ \sin \ (4\pi\delta_n/P)$$

lorsque la période du signal (SP) est égale à la demi période de graduation (P/2) de la graduation de mesure (14).

2. Dispositif pour produire des signaux qui, jusqu'à une largeur de bande prédéterminée, sont exempts d'harmoniques et sont obtenus par balayage d'une graduation de mesure (14) périodique à l'aide d'une graduation de balayage qui comporte au moins une zone de balayage (Y), caractérisé par le fait que la zone de balayage (Y) est formée conformément à une fonction modifiée, à savoir une fonction combinée Moiré-arcsinus, la graduation de balayage (22) étant réalisée selon la formule

$$y/2H \ = \ \delta(y)/P \ + \ 1/2\pi \ * \ \sin \ (2\pi\delta(y)/P)$$

lorsque la période du signal (SP) est égale à la période de graduation (P) de la graduation de mesure (14) et la graduation de balayage (22) étant réalisée selon la formule

$$y/2H \ = \ \delta(y)/P \ + \ 1/4\pi \ * \ \sin \ (4\pi\delta(y)/P)$$

lorsque la période du signal (SP) est égale à la demi période de graduation (P/2) de la graduation de mesure (14).

3. Dispositif selon la revendication 2, caractérisé par le fait que plusieurs zones de balayage (Y) sont disposées l'une derrière l'autre dans la direction de mesure (X), lesquelles zones de balayage (22) forment une graduation de balayage (22) périodique dont la période correspond à la période (P) de graduation de mesure (14).

FIG. 1

FIG. 2

FIG. 3

FIG.4

FIG. 5

FIG. 6

$$\frac{n}{N} \quad bzw. \quad \frac{y}{H}$$